Europäisches Patentamt

European Patent Office

Office européen des brevets

(19)

(11) Publication number: **0 032 973**
**B1**

# EUROPEAN PATENT SPECIFICATION

(45) Date of publication of patent specification: **01.08.84**

(51) Int. Cl.³: **B 65 G 57/06**

(21) Application number: **80105996.5**

(22) Date of filing: **03.10.80**

(54) Apparatus for the automatic discharge of panels from a machining line.

(30) Priority: **12.10.79 IT 1277179**

(43) Date of publication of application:
**05.08.81 Bulletin 81/31**

(45) Publication of the grant of the patent:
**01.08.84 Bulletin 84/31**

(84) Designated Contracting States:
**AT BE CH DE FR GB LI LU NL SE**

(56) References cited:
**DE - A - 2 459 571**
**FR - A - 2 176 147**
**GB - A - 1 005 370**

(73) Proprietor: **GIBEN IMPIANTI S.p.A.**
**24, Via Garganelli**
**I-40065 Pianoro (Bologna) (IT)**

(72) Inventor: **Benuzzi, Gino**
**5, Via Angelo Custode**
**I-40141 Bologna (IT)**

(74) Representative: **Porsia, Dino, Dr. et al,**
**c/o Succ. Ing. Fischetti & Weber Via Caffaro 3**
**I-16124 Genova (IT)**

Courier Press, Leamington Spa, England.

## Description

The present invention relates to an apparatus for the automatic discharge of panels, and for instance wood panels, coming from a suitable machining line, as for instance a wood panels polishing and cutting line, onto lifting and lowering supports which receive the panels and form a stack of superposed panels. An apparatus of the type above referred to is disclosed, for example, in the British patent specification No. 1,405,065 in the name of the same applicant as in the present invention.

In the apparatus according to the above mentioned British patent specification No. 1,405,065 there is provided a horizontal support plane formed by a frame onto which a number of steel sheets are stretched, which support plane is arranged above and at a very short distance from the underlying lifting and lowering support, the said horizontal support plane being slidably guided so as to be movable in one direction transverse to the panel advancing direction on the workpiece support of the panel machining line, from a position in which is aligned with the said workpiece support, to a position in which is clear of said workpiece support. Fixed abutment means cooperate with the upper surface of said support plane to prevent the panels from following the transverse movement of the support plane.

In this manner, the panels are discharged from the support plane onto the underlying lifting and lowering support, without any remarkable drop of level, which could disassemble the stack which is being orderly formed, and without causing that a panel or group of panels slide over another panel or group of panels when they are stacked the one over the other, with consequent scratches.

The above described apparatus presents however the inconvenience that frequently enough it requires the stretching of the steel sheets of the support plane, which have the tendency to become slackened due to the weight of the panels which they support. This requires a frame which is rather expensive, due to the cost of the steel sheets and of the sheet stretching devices. Moreover, during the discharge phase from the support plane to the underlying lifting and lowering support, the package of panels is arranged horizontally, so that in order to cause its displacement it is necessary to completely overcome the weight component of the said package.

Another apparatus of the type above referred to is illustrated in DE—A—2 459 571 which discloses an apparatus for the automatic discharge of panel of wood or the like from a workpiece support, located at the end of a machining line, onto one lifting and lowering support, said panels being removed from said workpiece support in a horizontal transfer direction, and comprising a tilting table mounted movable in the same horizontal transfer direction to and fro with respect to said workpiece support, said tilting table being tiltable around a horizontal fulcrum axis transverse to the said transfer direction, from a first loading position in which the supporting surface of the tilting table is coplanar to the said workpiece support, to a second discharging position in which the tilting table is inclined downwardly and one discharge edge of the said tilting table comes to be located in close proximity to the upper surface of the lifting and lowering support disposed beneath said tilting table, or to the upper surface of a stack of panels already lying on the said lifting and lowering support. Abutment means cooperate with the supporting surface of the tilting table to prevent the panels on said table from following the transfer direction movement of said table, thus causing the discharge of the panels, over the said discharge edge, from the inclined tilting table onto the underlying lifting and lowering table. The tilting table can be mounted on a carriage movable on horizontal guides.

According to the present invention, there is proposed to provide a second support table, arranged downstream of the first support table, and abutment means arranged above the said support tables, means being further provided for actuating said abutment means so as to discharge, selectively and at will, the panels loaded on a tilting table, mounted for to-and-fro movement with respect to the said workpiece support, on to either one of the said underlying support tables. In this manner, there are avoided the idle times normally required for the unloading of a support table loaded with panels, which idle times occur in apparatuses with only one support table; moreover, it is to be noted that the panels coming from the machining line may be cut and/or grouped by the cutting and sizing apparatus according to differing sizes and dispositions covering the surface of one support table, and therefore there may arise the need of alternately discharging a group of panels coming from the machining line on to one or another support table, specifically intended for receiving this or that particular group of panels.

More particularly, according to the present invention, there is provided an apparatus for the automatic discharge in a horizontal transfer direction of panels from a workpiece support at the end of a machining line, comprising a first support table movable upwardly and downwardly and arranged in said horizontal transfer direction; a tilting table mounted for to-and-fro movement with respect to said workpiece support in said horizontal transfer direction, said tilting table having a single discharge edge facing said workpiece support; said tilting table being tiltable about an horizontal axis transverse to said transfer direction, from a loading position in which the upper surface of said tilting table is substantially coplanar with said workpiece support, to a discharge position in which said upper surface is inclined downwardly and said discharge edge is adjacent to the effective upper surface of said support table disposed beneath said tilting table; first abutment means comprising a horizontal bar arranged transversely to said transfer direction cooperating with said upper surface of said tilting table to prevent panels on said tilting table from following its transfer direction movement, whereby said panels are caused to be discharged over said discharge edge onto said support table disposed beneath said tilting table, said first abutment means being provided above the end of said first support table which is downstream with respect to said workpiece support, characterized in that a second support table movable upwardly and downwardly is arranged downstream of the first support table, second abutment means are provided above the downstream end of said second support table and actuating means are provided for lifting the first abutment means to a height such that said tilting table when loaded with panels may pass beneath the first abutment means to be discharged on to said second support table.

According to another embodiment of the invention, there is provided an apparatus for the automatic discharge in a horizontal transfer direction of panels from a workpiece support at the end of a machining line, comprising a first support table movable upwardly and downwardly and arranged in said horizontal transfer direction; a tilting table mounted for to-and-fro movement with respect to said workpiece support in said horizontal transfer direction, wherein a second support table movable upwardly and downwardly is arranged downstream of the first support table; said tilting table has two discharge edges at opposite ends which can be brought selectively into close proximity with the upper surface of either one of said support tables disposed beneath said tilting table; said tilting table is tiltable alternately in opposite directions about an horizontal axis transverse to said transfer direction, from a loading position in which the upper surface of said tilting table is substantially coplanar with said workpiece support, to a discharge position in which said upper surface is inclined downwardly and said discharge edge is adjacent to the effective upper surface of a said support table disposed beneath said tilting table; abutment means are provided comprising a horizontal bar arranged transversely to said transfer direction cooperating with said upper surface of said tilting table to prevent panels on said tilting table from following its transfer direction movement, whereby said panels are caused to be discharged over said discharge edge onto a said support table disposed beneath said tilting table, said abutment means being located at a position between said first and second support tables; and actuating means are provided for causing the lifting of said abutment bar to a height sufficient to permit the passage therebeneath of said tilting table when loaded with panels to be discharged onto said second support table.

The tilting table according to the invention can be constructed sufficiently thick with respect to the previously mentioned support plane made of steel sheets, and therefore for its construction there can be employed materials which are less expensive than steel sheets and are sufficiently strong to support the weight of the panels. At the same time, the upper supporting surface of the tilting table can be provided with air nozzles emitting air under pressure so as to create an air cushion onto which the panels can slide, which is impossible in the case of a support surface made of steel sheets.

The above and other features of the invention, as well as the advantages deriving therefrom, will appear evident from the following description of two preferred embodiments of the apparatus according to the invention, made with reference to the attached sheets of drawings, in which:

Figures 1 and 2 show diagrammatically in side elevation an apparatus according to the invention, during two different phases of its operation.

Figure 3 is a diagrammatic top plan view of the tilting table forming part of the apparatus and of the guides onto which is movable.

Figure 4 is a detail of a transversal section of the apparatus.

Figures 5 and 6 show diagrammatically in side elevation another embodiment of the apparatus according to the invention, during two different phases of its operation.

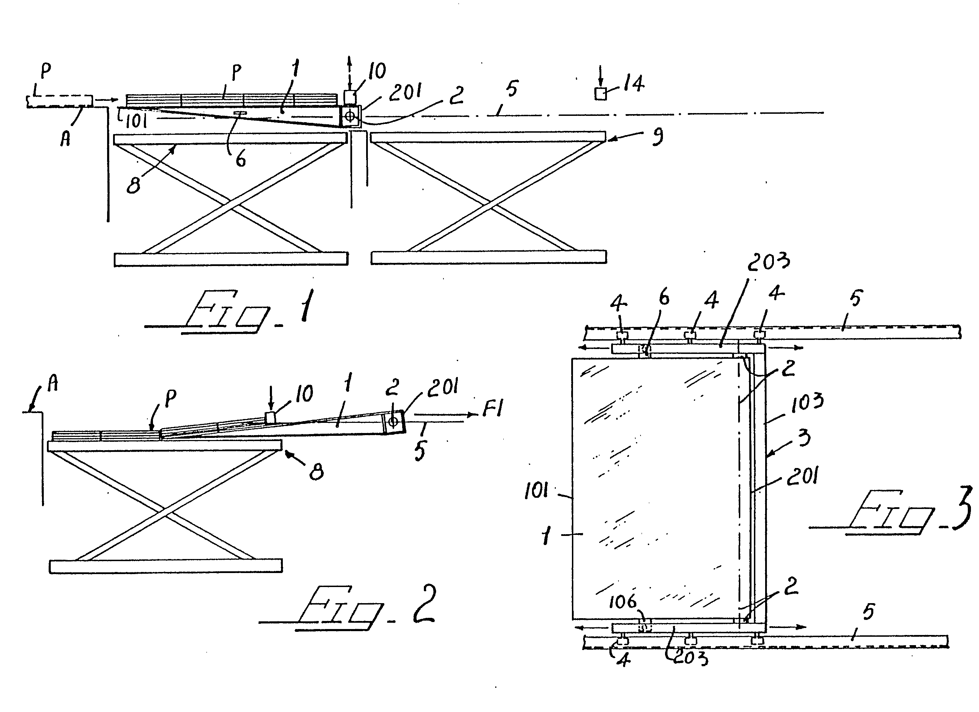

With particular reference to Figures 1 to 3, reference letter A indicates the workpiece support located at the discharge end of a line for machining wood panels P. The automatic discharge apparatus comprises a tilting table 1 presenting, in plan view from the top, a rectangular shape, and which is characterized by the fact that in side elevation, i.e. viewed from either one of the sides which are parallel to the direction of discharge of the wood panels P, it presents a right-angled triangular profile, that is a profile which gradually diminishes in thickness in the direction of the workpiece support A, in such a manner that the edge 101 of the tilting table 1 presents a minimum thickness, in so far as the strength requirements of the said table 1 (which is intended to support a package of panels P) allow. By way of example, the tilting table 1 can be constructed of a suitable strong metallic frame comprising a plurality of triangular support brackets onto which there is arranged the surface plate of the table. The upper surface of the table 1, onto which there must slide the panels P, is preferably lined or coated with suitable anti-friction material, so as to facilitate the sliding thereon of the wood panels P. As an alternative or in combination with the said anti-friction lining or coating, the upper surface of the tilting table 1 can be provided with air nozzles emitting air under pressure, so as to create (in a known manner) an air cushion on which the panels P can slide.

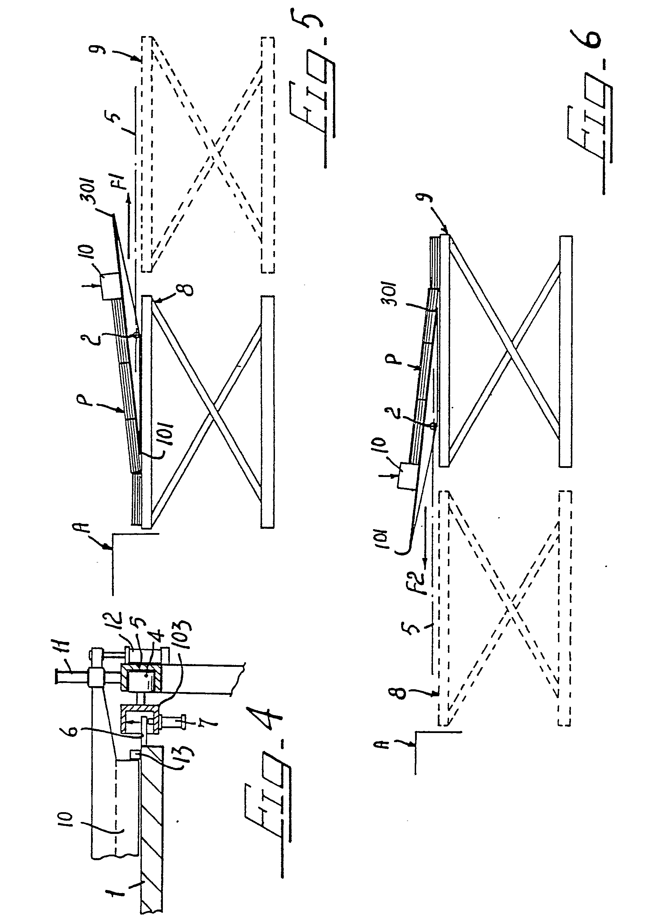

On the slide 201 which is opposite to the edge or side 101, the tilting table 1 is fulcrumed, around a transversal fulcrum axis 2, to a carriage 3, consisting of a transverse bar 103 and of two side bars 203 which are provided with rollers 4 so as to allow the longitudinal movement (i.e. in the same direction as the direction of discharge of the panels P from the workpiece support) along rectilinear and parallel support guides 5 (see particularly Figures 3 and 4) said guides being supported by a suitable supporting frame (not shown). Drive means, such as for example chains (not shown) are provided for alternately moving the carriage 3 along the said longitudinal guides 5.

Tilting means are provided for tilting the table 1 from a first position (Figure 1) in which the said table 1 is arranged with its upper supporting surface horizontally, to a second position (Figure 2) in which the upper supporting surface is inclined downwardly in the direction of the minimum thickness edge or side 101.

For this purpose, the tilting table 1 is provided with side lugs 6, 106 cooperating with fluid-pressure actuated cylinder and piston units 7, secured to the side bars 203 of the carriage 3, as it can be appreciated from Figure 4. Suitable adjustable end abutment means (not shown) are provided for guaranteeing the precision positioning of the tilting table 1 in the horizontal and in the inclined position.

Below the level of the tilting table 1, there are arranged two lifting and lowering support tables 8 and 9, which are of any type known in the art and which are incrementally lowered as they receive successively packages of panels P, from a position in which the said supporting tables 8 and 9 are just below the tilting table, to a position in which they are at level with a carrier table which receives the package of stacked panels, after which the support table (8, 9) is again lifted to its starting position just below the tilting table 1.

With reference to Figures 1 and 4, it is to be noted that above the tilting table 1, parallely and in correspondence with the fulcrum side 201, there is provided an abutment bar 10 which is mounted vertically movable by its extremities over vertical column guides 11 secured to the support guides 5. The lifting and lowering of the said abutment bar 10 is controlled by means of piston and cylinder units 12. The abutment bar 10 is provided at its ends with rollers 13 which roll onto the upper surface of the table 1, in such a manner that the lower edge of the abutment bar 10 is kept at a very short distance from the said upper surface of the table 1, but not in sliding or scraping contact.

In the case that, as shown in Figure 1, there is provided a second lifting and lowering support table 9, above the said second support table, parallel and in correspondence with the rear side of the said support table (having in mind the direction of movement of the panels P), there is provided a second abutment bar 14, mounted on the guides 5 in a similar manner as abutment bar 10.

The operation of the just described apparatus is the following:

Upon starting of its working cycle, the tilting table 1 (see Figure 1) is arranged with its upper supporting surface horizontal and coplanar with the supporting surface of the workpiece support A, and with its free edge 101 (i.e. the minimum thickness edge, opposite to the fulcrum edge 201) close to the discharge edge of the workpiece support A. At this stage, the package of panels P coming from the machining line can be transferred from the said workpiece support A onto the upper supporting surface of the tilting table 1 by any known means, for example pusher bars, which cause the sliding of the package of panels from the workpiece support A to the tilting table 1.

If the package of panels P is to be discharged on the first lifting and lowering support 8 (which in this case will be in its fully lifted position, immediately below the tilting table 1), then the table 1 is inclined downwardly, as shown in Figure 2, by suitably acting on the piston and cylinder units 7, so as to bring the free edge 101 of the tilting table 1 as close as possible to the level of the upper supporting surface of the lifting and lowering support 8. At this point, the tilting table 1 is drawn horizontally along the guides 5, away from above the lifting and lowering support 8, in the direction of the arrow F1 (Figure 2), while the abutment bar 10 is urged downwardly under the action of the piston and cylinder units 12, so as to practically "skim" at a constant minimum distance the upper supporting surface of the tilting table 1.

Due to the presence of the said abutment bar 10, the panels cannot follow the table 1 in its horizontal movement and are therefore discharged onto the underlying support 8. At this moment, the support 8 is lowered by an amount corresponding to the thickness of the discharged panels, and the tilting table 1 is returned to its starting position of Figure 1. If the panels must be discharged onto the second lifting and lowering support 9, then the abutment bar 10 is lifted so as to allow the passage of the table 1 (in horizontal position) carrying the package of panels. When the table 1 is above the support 9, the said table 1 is tilted downwardly and the abutment bar 14 is lowered, while the table 1 continues its horizontal movement away from the workpiece support A. In this manner, in a similar manner to what has been just described with reference to the support 8, the panels are discharged onto the support 9, which is then lowered by an amount corresponding to the thickness of the discharged panels.

In this manner, the following two main advantages are achieved:

— The package of panels is transferred from the tilting table onto the lowering platform without any remarkable drop of level, which could disassemble the package being formed.

— During the discharge from the table 1 onto the underlying support, the package slides on an inclined plane so that a portion of its weight is transformed in sliding component, which practically results into a lesser effort for the displacement of the package along the table.

With reference to Figures 5 and 6, there is shown a further embodiment of the discharging apparatus according to the invention, in which the tilting table presents in side view the profile of an isosceles triangle where the base constitutes the upper supporting surface of the table, while the fulcrum axis 2 is arranged approximately along the vertex defined by the two equal sides of the triangle. The tilting table is tiltably mounted, in a similar manner as described with reference to the preceding embodiment, on a carriage capable of horizontal movement along the guides 5, and it can be tilted down in both directions around the fulcrum axis 2, that is either in the direction of the discharge edge 101 (Figure 5), or in the direction of the other discharge edge 301 (Figure 6).

If the package of panels P has to be discharged on the first lowering support 8, the tilting table, after having been loaded in its horizontal position, is then inclined downwardly in the direction of edge 101, the abutment bar 10 is lowered, and then the table is horizontally moved away from the workpiece support A, thus causing the discharge of the panels on the said lowering support 8.

If, on the other hand, the package of panels P is to be discharged on the second lowering support 9, the operation will be as follows:

The table, in its horizontal position, coplanar with the workpiece support A and with its edge 101 adjacent or close to the discharge edge of the said workpiece support A, is loaded with a package of panels P. After the said loading, the table, still in its horizontal position, is moved away from the workpiece support A, along the guides 5, until it comes to be located above the second lowering support 9; in the meantime, the abutment bar 10 has been raised so as to allow the passage of the package of panels P loaded on the table. Thereafter, the table is inclined in the direction of the edge 301, the abutment bar 10 is lowered and the table is then moved again in the direction of the workpiece support A. In this manner, the package of panels P will be discharged onto the second lowering platform 9, while at the same time the table moves again to its loading position, adjacent to the workpiece support A, ready for another loading operation.

It is apparent that, in the just described second embodiment of the apparatus, the length of the horizontal guides 5 can be reduced, and one single abutment bar 10 is necessary, instead of two.

It is believed that the invention will have been clearly understood from the foregoing detailed description of some preferred embodiments.

## Claims

1. Apparatus for the automatic discharge in a horizontal transfer direction of panels (P) from a workpiece support (A) at the end of a machining line, comprising a first support table (8) movable upwardly and downwardly and arranged in said horizontal transfer direction; a tilting table (1) mounted for to-and-fro movement with respect to said workpiece support in said horizontal transfer direction, said tilting table having a single discharge edge (101) facing said workpiece support; said tilting table (1) being tiltable about an horizontal axis (2) transverse to said transfer direction, from a loading position in which the upper surface of said tilting table is substantially coplanar with said workpiece support (A), to a discharge position in which said upper surface is inclined downwardly and said discharge edge (101) is adjacent to the effective upper surface of said support table disposed beneath said tilting table; first abutment means (10) comprising a horizontal bar arranged transversely to said transfer direction cooperating with said upper surface of said tilting table to prevent panels on said tilting table from following its transfer direction movement, whereby said panels are caused to be discharged over said discharge edge onto said support table disposed beneath said tilting table, said first abutment means (10) being provided above the end of said first support table which is downstream with respect to said workpiece, support, characterized in that a second support table (9) movable upwardly and downwardly is arranged downstream of the first support table (8), second abutment means (14) are provided above the downstream end of said second support table (9) and actuating means (12) are provided for lifting the first abutment means (10) to a height such that said tilting table (1) when loaded with panels may pass beneath the first abutment means (10) to be discharged on to said second support table (9).

2. Apparatus according to claim 1, characterized by the fact that said tilting table (1) is mounted on a carriage (3) movable on horizontal guides (5).

3. Apparatus according to claim 2, characterized by the fact that tilting table (1) is supported by said carriage (3) on a horizontal fulcrum axis (2) and on vertically actuating means (7) for causing the tilting movement of said table.

4. Apparatus for the automatic discharge in a horizontal transfer direction of panels (P) from a workpiece support (A) at the end of a machining line, comprising a first support table (8) movable upwardly and downwardly and arranged in said horizontal transfer direction; a tilting table (1) mounted for to-and-fro movement with respect to said workpiece support in said horizontal transfer direction, wherein a second support table (9) movable upwardly and downward is arranged downstream of the first support table (8); said tilting table has two discharge edges (101, 301) at opposite ends which can be brought selectively into close proximity with the upper surface of either one of said support tables disposed beneath said tilting table; said tilting table is tiltable alternately in opposite directions about an horizontal axis transverse to said transfer direction, from a loading position in which the upper surface of said tilting table is substantially coplanar with said workpiece support, to a discharge position in which said upper surface is inclined downwardly and said discharge edge is adjacent to the effective upper surface of a said support table disposed beneath said tilting table; abutment means (10) are provided comprising a horizontal bar arranged transversely to said transfer direction cooperating with said upper surface of said tilting table to prevent panels on said tilting table from following its transfer direction movement, whereby said panels are caused to be discharged over said discharge edge onto a said support table disposed beneath said tilting table, said abutment means being located at a position between said first and second support tables; and actuating means (12) are provided for causing the lifting of said abutment bar to a height sufficient to permit the passage therebeneath of said tilting table when loaded with panels to be discharged onto said second support table (9).

**Patentansprüche**

1. Vorrichtung zum automatischen Abladen von Paneelen (P) von einer Werkstückstütze (A) am Ende einer Bearbeitungsstraße in horizontaler Übergaberichtung, mit einem ersten Abstütztisch (8), der in der genannten horizontalen Übergaberichtung angeordnet und nach oben und unten bewegbar ist, einem Kipptisch (1), der gegenüber der Werkstückstütze in der genannten horizontalen Übergaberichtung hin- und herverstellbar ist, einen der Werkstückstütze gegenüber liegenden Entladerand (101) aufweist und um eine quer zur Übergaberichtung liegende, horizontale Achse (2) aus einer Beladestellung, in der die Oberseite im wesentlichen mit der Werkstückstütze (A) in einer Ebene liegt, in eine Entladestellung kippbar ist, in der die genannte Oberseite nach unten geneigt ist und der Entladerand (101) an der wirksamen Oberseite des unter dem Kipptisch angeordneten Abstütztisches liegt; ersten Anschlagmitteln (10) mit einem quer zur Übergaberichtung angeordneten Anschlagbalken, der mit der Oberseite des Kipptisches zusammenwirkt, um Paneele auf dem Kipptisch daran zu hindern, ihrer Bewegung in Übergaberichtung zu folgen, wobei die Paneele über den Entladerand auf den unter dem Kipptisch angeordneten Abstütztisch entladen werden und die ersten Anschlagmittel (10) oberhalb des in bezug auf die Wertkstückstütze in Strömungsrichtung abwärts liegenden Endes des ersten Abstütztisches angeordnet sind, dadurch gekennzeichnet, daß ein zweiter nach oben und unten bewegbarer Abstütztisch (9) in Förderrichtung hinter dem ersten Abstütztisch (8) angeordnet und zweite Anschlagmittel (14) oberhalb des in Förderrichtung abwärts liegenden Endes des zweiten Abstütztisches (9) angeordnet sind, wobei Betätigungsmittel (12) zum Anheben der ersten Anschlagmittel (10) auf eine solche Höhe vorgesehen sind, daß der mit Paneelen beladene Kipptisch (1) unter den ersten Anschlagmitteln (10) hindurchtreten und auf den zweiten Abstütztisch (9) entladen werden kann.

2. Vorrichtung nach Anspruch 1, dadurch gekennzeichnet, daß der Kipptisch (1) auf einem auf horizontalen Führungen (5) verstellbaren Wagen (3) montiert ist.

3. Vorrichtung nach Anspruch 2, dadurch gekennzeichnet, daß der Kipptisch (1) am Wagen (3) auf einer horizontalen Schwenkachse (2) und an vertikalen Betätigungseinrichtungen (7) für die Schwenkverstellung des Tisches abgestützt ist.

4. Vorrichtung zum automatischen Abladen von Paneelen (P) von einer Werkstückstütze (A) am Ende einer Bearbeitungsstraße in horizontaler Übergaberichtung, mit einem ersten Abstütztisch (8) der nach oben und unten bewegbar in horizontaler Übergagerichtung auf die Werkstückstütze folgend angeordnet ist, und einem Kipptisch (1) gegenüber der Werkstückstütze in der horizontalen Übergaberichtung hin- und herverstellbar ist, wobei ein zweiter Abstütztisch (9), auf den ersten Abstütztisch (8) in Förderrichtung folgend angeordnet und nach oben und unten bewegbar ist, welcher Kipptisch zwei Entladeränder (101, 301) an entgegengesetzten Enden aufweist, die wahlweise in unmittelbarer Nähe mit der Oberseite eines der beiden Abstütztische gebracht werden können, die unterhalb des Kipptisches angeordnet sind, wobei der Kipptisch wechselweise in entgegengesetzten Richtungen um eine quer zur Übergaberichtung liegende Horizontalachse aus einer Beladungsstellung, in der die Oberseite des Kipptisches im wesentlichen mit der Werkstückstütze in einer Ebene liegt, in eine Entladestellung kippbar ist, in der die Oberseite nach unten geneigt ist und der Entladerand an der wirksamen Oberseite des unterhalb des Kipptisches angeordneten Abstütztisches liegt, wobei Anschlagmittel (10) mit einem quer zur Übergaberichtung angeordneten Anschlagbalken vorgesehen sind, die mit der Oberseite des Kipptisches zusammenwirken, um Paneele auf dem Kipptisch daran zu hindern, ihrer Bewegung in Übergaberichtung zu folgen, so daß die Paneele über den Entladerand auf den unter dem Kipptisch angeordneten Abstütztisch entladen werden, die Anschlagmittel zwischen dem ersten und zweiten Abstütztisch angebracht und Betätigungseinrichtungen (12) zum Anheben des Anschlagbalkens auf eine solche Höhe vorgesehen sind, daß unter ihm der mit Paneelen beladene Kipptisch zur Entladung auf den zweiten Abstütztisch (9) hindurchtreten kann.

## Revendications

1. Installation de déchargement automatique suivant une direction horizontale de transport de panneaux (P) d'un support de pièce (A) à l'extrémité d'une ligne de fabrication, comprenant une première table formant support (8), mobile vers le haut et vers le bas et s'étendant suivant ladite direction horizontale de transport; une table basculante (1) montée de manière à effectuer un mouvement d'aller et retour par rapport audit support de pièce, suivant ladite direction horizontale de transport, ladite table basculante ayant un bord unique de déchargement (101) faisant face audit support de pièce; ladite table basculante (1) pouvant basculer autour d'un axe horizontal (2) transversal à ladite direction de transport, d'une position de chargement dans laquelle la surface supérieure de ladite table basculante est sensiblement coplanaire avec ledit support de pièce (A), à une position de déchargement dans laquelle ladite surface supérieure est inclinée vers le bas et ledit bord de déchargement (101) est adjacent à la surface supérieure effective de ladite table formant support disposée en-dessous de ladite table basculante; des premiers moyens de butée (10) comprenant une barre horizontale disposée transversalement à ladite direction de transport et coopérant avec ladite surface supérieure de ladite table basculante pour empêcher des panneaux se trouvant sur ladite table basculante de suivre son mouvement suivant la direction de transfert, lesdits panneaux se déchargeant par dessus ledit bord de déchargement sur ladite table formant support disposée en-dessous de ladite table basculante, lesdits moyens de butée (10) étant prévus au-dessus de l'extrémité de ladite première table formant support qui est en aval par rapport audit support de pièce, caractérisée en ce qu'une seconde table formant support (9), mobile vers le haut et vers le bas, est disposée en aval de la première table formant support (8), de seconds moyens de butée (14) sont prévus au-dessus de l'extrémité aval de ladite seconde table formant support (9) et des moyens de commande (12) sont prévus pour élever les premiers moyens de butée (10) à une hauteur telle que ladite table basculante (1), lorsqu'elle est chargée de panneaux, puisse passer en-dessous des premiers moyens de butée (10) pour être déchargée sur ladite seconde table formant support (9).

2. Installation suivant la revendication 1, caractérisée par le fait que ladite table basculante (1) est montée sur un chariot (3) mobile sur des glissières horizontales (5).

3. Installation suivant la revendication 2, caractérisée par le fait que la table basculante (1) est supportée par ledit chariot (3) sur un axe d'articulation horizontal (2) et sur des moyens d'actionnement (7) suivant la verticale, pour provoquer le mouvement de basculement de ladite table.

4. Installation de déchargement automatique suivant une direction horizontale de transport de panneaux (P) d'un support de pièce (A) à l'extrémité d'une ligne de fabrication, comprenant une première table formant support (8) mobile vers le haut et vers le bas et s'étendant suivant ladite direction horizontale de transport, une table basculante (1) montée de manière à avoir un mouvement d'aller et retour par rapport audit support de pièce suivant ladite direction horizontale de transport une seconde table formant support (9) mobile vers le haut et vers le bas étant disposée en aval de la première table formant support (8); ladite table basculante ayant deux bords de déchargement (101, 301) aux extrémités opposés qui peuvent être amenés sélectivement à proximité immédiate de la surface supérieure de l'une ou l'autre desdites tables formant support, disposées en-dessous de ladite table basculante; ladite table basculante pouvant basculer alternativement dans des sens opposés autour d'un axe horizontal transversal audit sens de transfert, d'une position de chargement dans laquelle la surface supérieure de ladite table basculante est sensiblement coplanaire audit support de pièce, à une position de déchargement dans laquelle ladite surface supérieure est inclinée vers le bas, et ledit bord de déchargement est adjacent à la surface supérieure effective d'une dite table formant support disposée en-dessous de ladite table basculante; des moyens de butée (10) sont prévus et comprennent une barre horizontale disposée transversalement à ladite direction de transport et coopérant avec ladite surface supérieure de ladite table basculante pour empêcher des panneaux se trouvant sur ladite table basculante de suivre son mouvement suivant la direction de transport, lesdits panneaux se déchargeant par dessus ledit bord de déchargement sur ladite table formant support disposée en-dessous de ladite table basculante, lesdits moyens de butée étant placés en un endroit compris entre lesdites premières et secondes tables formant support; et des moyens de commande (12) sont prévus pour provoquer l'élévation de ladite barre de butée à une hauteur suffisante pour permettre à ladite table basculante de passer en-dessous quand elle est chargée de panneaux à décharger sur ladite seconde table formant support (9).

Fig. 1

Fig. 2

Fig. 3

0 032 973

Fig. 4

Fig. 5

Fig. 6

2